# EUROPEAN PATENT SPECIFICATION

(11) **EP 3 564 776 B1**
(45) Date of publication and mention of the grant of the patent: **14.12.2022**
(21) Application number: 19168044.6
(22) Date of filing: 09.04.2019
(51) Int. Cl.: G06F 1/16, G06F 1/3234, H04M 1/02

(54) **ELECTRONIC APPARATUS AND FOLDABLE DISPLAY SCREEN**
ELEKTRONISCHE VORRICHTUNG UND FALTBARER ANZEIGEBILDSCHIRM
APPAREIL ÉLECTRONIQUE ET ÉCRAN D'AFFICHAGE PLIABLE

(30) Priority: 04.05.2018 CN 201810430424
(43) Date of publication of application: 06.11.2019
(73) Proprietor: GUANGDONG OPPO MOBILE TELECOMMUNICATIONS CORP., LTD., Wusha, Chang'an Dongguan, Guangdong 523860 (CN)
(72) Inventor: HOU, Xiang, Dongguan, Guangdong 523860 (CN)
(74) Representative: Manitz Finsterwald Patent- und Rechtsanwaltspartnerschaft mbB

(56) References cited:
- WO-A1-2018/069977
- US-A1- 2012 264 489
- US-A1- 2015 205 560
- US-A1- 2017 003 714

## Description

### TECHNICAL FIELD

The present disclosure relates to the field of electronic apparatuses , and more particularly to an electronic apparatus and a foldable display screen.

### BACKGROUND

With the development of flexible screens, foldable display devices are available now. The existing foldable display device generally may be a roll-type display device or a symmetric foldable display device. However, the roll-type display device requires a complicated driving mechanism and a flexible screen of the scroll type display device is prone to being torn due to forcible pulling. When being folded, a screen of the symmetric foldable screen may be fully covered, and thus it is inconvenient for a user to view text prompt information or answer calls in time.

US 2017/003714 A1 discloses a foldable flexible display device with three rotatably connected parts, further comprising a sensor for detecting the folding state of the device.

WO 2018069977 A1 discloses an OLED panel and a rear face of the OLED panel of faces upper faces of first to third housings. The first to third housings are disposed side-by-side in a first direction, exposing a display face in its entirety, in a case that a first hinge and a second hinge are set to open states. The third housing is larger in size in the first direction than the first housing and the second housing. The display face is partially exposed in a case that the first hinge and the second hinge are set to a closed state and an open state, respectively.
US 2012/264489 A1 discloses a portable communication device which has a flexible display unit to form a predetermined curvature or be unfolded that includes a first housing, and second and third housings rotatably coupled to both ends of the first housing, first and second hinge modules provided between the first, second, and third housings to enable the second and third housings to rotate. The flexible display unit is provided on the first, second, and third housings to form a curvature or be unfolded on the first, second, and third housings through rotation together with the second and third housings. First and second curvature space portions formed between the first, second, and third housings allow formation of the curvature of the flexible display unit.

The invention is defined in the appended claims.

### BRIEF DESCRIPTION OF THE DRAWINGS

To better illustrate the technical solutions of embodiments of the present disclosure, the following descriptions will briefly illustrate the accompanying drawings described in the illustrated embodiments. Obviously, the following described accompanying drawings are merely some embodiments of the present disclosure. Those skilled in the art can obtain other accompanying drawings according to the described accompanying drawings without creative efforts.
FIG. 1 is a schematic structure view of an electronic apparatus according to a first embodiment of the present disclosure.
FIG. 2 is a schematic structure view of the electronic apparatus according to the first embodiment of the present disclosure, showing the electronic apparatus folded along a first folding line.
FIG. 3 is a schematic structure view of the electronic apparatus according to the first embodiment of the present disclosure, showing the electronic apparatus folded along a second folding line.
FIG. 4 is a schematic front view of the electronic apparatus of FIG. 3.
FIG. 5 is a schematic exploded perspective view of the electronic apparatus according to the first embodiment of the present disclosure.
FIG. 6 is an enlarged view of a portion VI of FIG. 5.
FIG. 7 is a schematic structure side view of the electronic apparatus of FIG. 5 folded along the second folding line.
FIG. 8 is a schematic structure view of an electronic apparatus according to a second embodiment of the present disclosure.
FIG. 9 is a schematic structure view of an electronic apparatus according to a third embodiment of the present disclosure.
FIG. 10 is a schematic structure view of an electronic apparatus according to a fourth embodiment of the present disclosure.

### DETAILED DESCRIPTION OF ILLUSTRATED EMBODIMENTS

Technical solutions of embodiments of the present disclosure will be described clearly and completely in combination with the accompanying drawings of the embodiments of the present disclosure. Obviously, the described embodiments are merely a part rather than all embodiments of the present disclosure.

In the description of the embodiments of the present disclosure, it can be understood that the orientation or positional relationship indicated by the terms "up", "down", "left", "right", or the like is based on the orientation or positional relationship illustrated in the drawings, and is merely for convenience of description and simplified description, rather than implied or indicating that the device or component referred to must have a particular orientation, a structure and operated in a particular orientation, and thus is not to be construed as limiting the present disclosure.

An electronic apparatus is provided. The electronic apparatus includes a casing and a foldable display screen. The casing includes a first frame, a middle frame having a first side and a second side opposite the first side, and a second frame. The first frame is rotatably attached to the first side of the middle frame and the second frame is rotatably attached to the second side of the middle frame. The foldable display screen includes a back surface attached to the middle frame, the first frame, and the second frame of the casing. The foldable display screen further includes a display surface opposite the back surface and configured to display visual information. The foldable display screen is operable to be folded along the first side of the middle frame to be in a first state, and is operable to be folded along the second side of the middle frame to be in a second state. The display surface is invisible in the first state. Part of the display surface is visible and remaining part of the display surface is invisible in the second state.

In at least one embodiment, the display surface further includes a first display area disposed at the first frame, a second display area disposed at the second frame, and a middle display area disposed at the middle frame and located between the first display area and the second display area. Part of the first display area is exposed in the second state. The second display area covers the middle display area and remaining part of the first display area in the second state. The part of the first display area is the part of the display surface and the remaining part of the first display area is the remaining part of the display surface.

In at least one embodiment, the first display area is fully covered by the second display area and the middle display area in the first state.

In at least one embodiment, the middle display area has a width equal to a width of the part of the first display area uncovered by the second display area in the second state.

In at least one embodiment, the first display area, the second display area, and the middle display area are all rectangular, and the first display area has an area equal to a sum of an area of the second display area and an area of the middle display area.

In at least one embodiment, the electronic apparatus further includes a main board, the main board includes a controller configured to control display of the first display area, the middle display area, and the second display area according to switch between the first state and the second state of the foldable display screen.

In at least one embodiment, the controller is configured to turn off the first display area, the middle display area, and the second display area in the first state, and to turn off the middle display area, the second display area, and the remaining part of the first display area covered by the second display area and turn on the part of the first display area in the second state.

In at least one embodiment, the controller is further configured to turn on the first display area, the middle display area, and the second display area when the foldable display screen is in an unfolded state.

In the present invention, the electronic apparatus further includes a first position sensor disposed at the first frame and a second position sensor disposed at the second frame, the first position sensor and the second position sensor are electrically coupled to the controller, and the controller is configured to determine whether the foldable display screen is in the first state, the second state, the folded state according to a relative positional relationship between the first position sensor and the second position sensor.

In at least one embodiment, the controller is configured to determine that the foldable display screen is in the first state when a distance between the first position sensor and the second position sensor is less than a preset distance, the controller is further configured to determine that the foldable display screen is in the second state when a distance between the first position sensor and the second position sensor is equal to the preset distance, and the controller is further configured to determine that the foldable display screen is in the unfolded state when a distance between the first position sensor and the second position sensor is greater than the preset distance.

Alternatively, in the present invention, instead of the first position sensor and the second position sensor, the electronic apparatus further includes a first pressure sensor disposed at the first frame and a second pressure sensor disposed at the middle frame, the first pressure sensor and the second pressure sensor are electrically coupled to the controller, the controller is configured to determine that the foldable display screen is in the first state when both the first pressure sensor and the second sensor sense pressure, the controller is further configured to determine that the foldable display screen is in the second state when the second sensor rather the first sensor senses pressure, and the controller is further configured to determine that the foldable display screen is in the unfolded state when neither the first pressure sensor nor the second sensor senses pressure.

In at least one embodiment, the first frame and the middle frame defines a receiving space therebetween to receive a curved portion of the foldable display screen in the second state, and the second frame and the middle frame define a second receiving space therebetween to receive a curved portion of the foldable display screen in the second state.

In at least one embodiment, the electronic apparatus further includes connecting members, each of the connecting members includes a pair of first tabs disposed at the middle frame, a pair of second tabs disposed at the second frame or at the first frame, a connecting bar, and a pair of rotating shafts, the connecting bar has an end rotatably connected to the pairs of first tabs through one of the rotating shafts, and another end rotatable connected to the pair of second tabs through the other one of the rotating shafts.

In at least one embodiment, the connecting members are elastic pieces trips or hinges.

In embodiments of the present invention, the foldable display screen is operable to be folded along a first folding line corresponding to the first side of the middle frame to be in a first state, and is operable to be being folded along a second folding line corresponding to the second side of the middle frame to be in a second state. The second folding line is parallel to and spaced from the first folding line. The first folding line is a symmetrical center line of the foldable display screen.

In at least one embodiment, the foldable display screen includes a first display area corresponding to the first frame, a second display area corresponding to the second frame, and a middle display area corresponding to the middle frame and located between the first display area and the second display area. The second display area covers the middle display area and the remaining part of the display screen in the second state. The part of the foldable display screen is exposed in the second state. The first display area is fully covered by the second display area and the middle display area in the first state.

In embodiments of the present invention, the foldable display screen includes a back surface configured to be attached to a casing of an electronic apparatus, and a display surface opposite the back surface and configured to display visual information. The display foldable screen is configured to be folded to switch between a first state and a second state. The display surface is invisible in the first state. Part of the display surface is visible and remaining part of the display surface is invisible in the second state.

In at least one embodiment, the display surface further includes a first display area, a second display area, and a middle display area having opposite sides and disposed between the first display area and the second display area, the first display area is rotatable relative to one side of the middle display area, the second display area is rotatable relative to the other side of the middle display area.

In at least one embodiment, part of the first display area is exposed in the second state. The second display area covers the middle display area and remaining part of the first display area in the second state. The part of the first display area is the part of the display surface and the remaining part of the first display area is the remaining part of the display surface. The first display area is fully covered by the second display area and the middle display area in the first state.

In at least one embodiment, the first display area, the second display area, and the middle display area are all rectangular, and the first display area has an area equal to a sum of an area of the second display area and an area of the middle display area.

In at least one embodiment, the middle display area has a width equal to a width of the part of the first display area uncovered by the second display area in the second state.

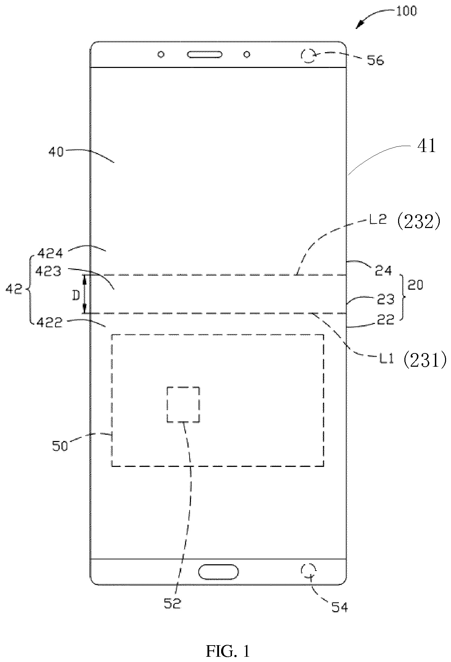

FIG. 1 illustrates a schematic structure view of an electronic apparatus according to a first embodiment of the present disclosure. An electronic apparatus 100 provided herein includes a casing 20 and a foldable display screen 40 attached to the casing 20. The casing 20 includes a first frame 22, a middle frame 23, and a second frame 24. The middle frame 23 has a first side 231 and a second side 232 parallel to and spaced from the first side 231. The first frame 22 is rotatably attached to the first side 231 of the middle frame 23. The second frame 24 is rotatably attached to the second side 232 of the middle frame 23. The second frame 24. The foldable display screen 40 has a back surface 41 attached to the casing 20 and a display surface 42 opposite the back surface 41. The display surface 42 is configured to display visual information. The display surface 42 has a first display area 422 disposed at the first frame 22, a second display area 424 disposed at the second frame 24, and a middle display area 423 disposed at the middle frame 23 and located between the first display area 422 and the second display area 424. The foldable display screen 40 can be folded along the first side 231 of the middle frame 23 to be in a first state, and folded along the second side 232 of the middle frame 23 to be in a second state. The display surface 42 is invisible in the first state, and part 4220 of the display surface 42 is visible and remaining part 4221 of the display surface 42 is invisible in the second state. That is, the electronic apparatus 100 can be folded along the first side 231 of the middle frame 23 and the second side 232 of the middle frame 23.

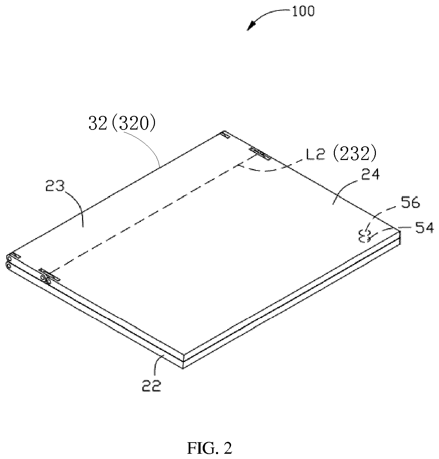

FIG. 2 illustrates a schematic structure view of the electronic apparatus according to the first embodiment of the present disclosure when the electronic apparatus is folded along a first folding line. The first side 231 of the middle frame 23 can act as a first folding line L1 and the second side 232 of the middle frame 23 can act as a second folding line L2. The first folding line L1 is a symmetrical center line of the foldable display screen 40. The second folding line L2 is parallel to and spaced from the symmetrical center line of the foldable display screen 40. After the foldable display screen 40 is folded along the first folding line L1 to be in the first state, the first display area 422 is fully covered by the second display area 424 and the middle display area 423.

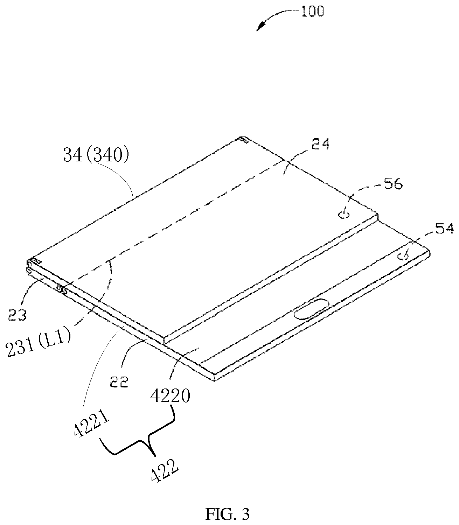

FIG. 3 illustrates a schematic structure view of the electronic apparatus according to the first embodiment of the present disclosure when the electronic apparatus is folded along a second folding line. After the foldable display screen 40 is folded along the second folding line L2 to be in the second state, part of the first display area 422 is exposed and visible, and remaining part of the first display area 422 is covered by the second display area 424 and invisible. The part of the first display area 422 is the part 4220 of the display surface 42 and the remaining part of the first display area 422 is the remaining part 4221 of the display surface 42.

In the illustrated embodiment, the electronic apparatus 100 is a mobile phone. It can be understood that in other embodiments, the electronic apparatus 100 can be, but is not limited to, a wireless phone, a pager, a web browser, a notepad, a calendar, and/or a global positioning system (GPS) receiver. In the illustrated embodiment, the foldable display screen 40 is a flexible screen.

When the foldable display screen 40 is in the second state, the second display area 424 covers the middle display area 423 and the remaining part 4221 of the first display area 422 such that the part 4220 is exposed on the first display area 422. The part 4220 can be controlled to display simple information, such as an incoming call, a text message prompt, a music playback, and calendar information and time information. Therefore, when the electronic apparatus 100 is folded along the second folding line L2 to be in the second state, the user can answer the call in time, acquire some simple information, and perform some simple operations through the part 4220, which is convenient to operate and can save power.

When the foldable display screen 40 is in the first state, the second display area 424 and the middle display area 423 fully cover the first display area 422. When the foldable display screen 40 is expanded to be in an unfolded state, the first display area 422, the second display area 424, and the middle display area 423 cooperatively form a large complete display area.

In the illustrated embodiment, the foldable display screen 40 is a rectangular flexible screen. The first folding line L1 coincides with a lateral symmetrical center line of the foldable display screen 40 and the second folding line L2 is parallel to and spaced from the first folding line L1. That is, the first folding line L1 and the second folding line L2 both extend in a direction parallel to the width direction of the foldable display screen 40. In the illustrated embodiment, the first display area 422, the second display area 424, and the middle display area 423 are all rectangular.

The second folding line L2 can be located at one side of the first folding line L1. That is, the second folding line L2 is located adjacent to a top end of the electronic apparatus 100 (i.e., a top end of the foldable display screen 40) or the second folding line L2 is located adjacent to a bottom end of the electronic apparatus 100 (i.e., a bottom end of the foldable display screen 40).

In the illustrated embodiment, when the second folding line L2 is located adjacent to the top end of the electronic apparatus 100, an area between the top end of the foldable display screen 40 and the second folding line L2 is the second display area 424, an area between the bottom end of the foldable display screen 40 and the first folding line L1 is the first display area 422, and an area between the first folding line L1 and the second folding line L2 of the foldable display screen 40 is the middle display area 423. An area of the first display area 422 is larger than an area of the second display area 424. The area of the first display area 422 is equal to a sum of the area of the second display area 424 and an area of the middle display area 423. After the foldable display screen 40 is folded along the first folding line L1 to be in the first state, the first display area 422 is fully covered by the second display area 424 and the middle display area 423. After the foldable display screen 40 is folded along the second folding line L2 to be in the second state, the second display area 424 covers the middle display area 423 and the remaining part 4221 of the first display area 422. The part 4220 of the first display area 422 is uncovered to be exposed.

In other embodiments, the second folding line L2 can be located adjacent to the bottom end of the electronic apparatus 100. That is, an area of an area between the top end of the foldable display screen 40 and the first folding line L1 is larger than an area of an area between the second folding line L2 and the bottom end of the foldable display screen 40. The area between the top end of the foldable display screen 42 and the first folding line L1 is as the first display area 422, the area between the second folding line L2 and the bottom end of the foldable display screen 40 is as the second display area 424, and an area between the first folding line L1 and the second folding line L2 of the foldable display screen 42 is as the middle display area 423. The area of the first display area 422 is larger than the area of the second display area 424 and is equal to a sum of the area of the second display area 424 and the area of the middle display area 423.

A distance D between the first folding line L1 and the second folding line L2 ranges from 10mm to 30mm. In the illustrated embodiment, the distance D between the first folding line L1 and the second folding line L2 is 10mm.

The distance D between the first folding line L1 and the second folding line L2 is equal to a width of the part 4220. That is, the width of the part 4220 ranges from 10mm to 30mm. In the illustrated embodiment, the width of the part 4220 is 10mm. In the second state, the part 4220 can be controlled to display an incoming call icon 4231, a text message prompt icon 4233, a music playback icon 4237, and a calendar information icon and time information icon 4238.

The electronic apparatus 100 further includes a main board 50 disposed at the first frame 22. The main board 50 includes a control circuit. The control circuit is configured to control the foldable display screen 40. The control circuit includes a controller 52. The controller 52 is configured to control display of the first display area 422, the middle display area 423, and the second display area 424 according to according to switch between the first state and the second state of the foldable display screen 40. In other embodiments, the main board 50 can be disposed at the second frame 24.

As illustrated in FIG. 2, after the foldable display screen 40 is folded along the first folding line L1 to be in the first state, the first display area 422 is fully covered by the middle display area 423 and the second display area 424. The controller 52 turns off the first display area 422, the middle display area 423, and the second display area 424.

As illustrated in FIG. 3, after the foldable display screen 40 is folded along the second folding line L2 to be in the second state, the middle display area 423 and the remaining part 4221 of the first display area 422 are covered by the second display area 424, and the part 4220 of the first display area 422 is exposed. The controller 52 turns off the middle display area 423, the second display area 424, and the remaining part 4221, and turns on the part 4220. At this time, only the part 4220 operates, which can save the power of the electronic apparatus 100 and reduce the loss to the foldable display screen 40.

When the foldable display screen 40 is in the unfolded state, the first display area 422, the middle display area 423, and the second display area 424 form the large complete display area. At this time, the controller 52 controls the first area 422, the middle display area 423, and the second display area 424 to be turned on, which provides a large display screen and improves the user experience.

The electronic apparatus 100 further comprises a pair of sensors to detect the state of the foldable display screen 40. One of the sensors is disposed at the first frame 22 and the other one of the sensors is disposed at the second frame 24.

In the present invention, the sensors are a first position sensor 54 and a second position sensor 56. The first position sensor 54 is disposed at the first frame 22 and the second position sensor 56 is disposed at the second frame 24. The first position sensor 54 and the second position sensor 56 are electrically coupled to the controller 52. The controller 52 is configured to determine whether the foldable display screen 40 is in the first state, the second state, or in the unfolded state according to a relative positional relationship between the first position sensor 54 and the second position sensor 56. In other words, the controller 52 is configured to determine whether the foldable display screen 40 is in the first state, the second state, or in the unfolded state according to a distance between the first position sensor 54 and the second position sensor 56.

When the foldable display screen 40 is in the second state, the first position sensor 54 and the second position sensor 56 are spaced at a gap. A width of the gap is equal to the distance D between the first folding line L1 and the second folding line L2. That is, in the second state, the distance between the first position sensor 54 and the second position sensor 56 is equal to the distance D which can be set as a preset distance. In the first state, the first position sensor 54 aligns with the second position sensor 56, that is, the distance between the first position sensor 54 and the second position sensor 56 is less than the distance D. When the foldable display screen 40 is in the unfolded state, the distance between the first position sensor 54 and the second position sensor 56 is greater than the distance D, that is, the distance between the first position sensor 54 and the second position sensor 56 is greater than the distance D.

When the distance between the first position sensor 54 and the second position sensor 56 is less than to the preset distance, the controller 52 determines that the foldable display screen 40 is in the first state and turns off the first display area 422, the second display area 424, and the middle display area 423. When the distance between the first position sensor 54 and the second position sensor 56 is equal to the preset distance, the controller 52 determines that the foldable display screen 40 is in the second state and turns off the middle display area 423, the second display area 424, and the remaining part 4221 of the first display area 422, and turns on the part 4220. When the distance between the first position sensor 54 and the second position sensor 56 is greater than the preset distance, the controller 52 determines that the foldable display screen 40 is in the unfolded state and turns on the first display area 422, the middle display area 423, and the second display area 424, to enable the foldable display screen 42 to form the large complete display screen.

In the illustrated embodiment, the first position sensor 54 is located at one end of the first frame 22 away from the middle frame 23. The second position sensor 56 is located at one end of the second frame 24 away from the middle frame 23. That is, the first position sensor 54 is located at a bottom end of the casing 20, and the second position sensor 56 is located at a top end of the casing 20. When the foldable display screen 42 is folded along the first folding line L1 to be in the first state, the first position sensor 54 aligns with the second position sensor 56. When the foldable display screen 42 is folded along the second folding line L2 to be in the second state, the first position sensor 54 is spaced from the second at the distance D.

Alternatively, in the present invention, the sensors are a first pressure sensor and a second pressure sensor, to replace the first position sensor 54 and the second position sensor 56. The first pressure sensor is disposed at the end of the first frame 22 away from the middle frame 23 and the second pressure sensor is disposed at the middle frame 23. The first pressure sensor and the second pressure sensor are electrically coupled to the controller 52. The controller 52 is further configured to determine whether the foldable display screen 40 is in the first state, the second state, or the unfolded state according to pressure detected by the first pressure sensor and the second pressure sensor.

When the foldable display screen 40 is in the first state, the first display area 422 is fully covered by the second display area 424 and the middle display area 423. Thus, the first pressure sensor and the second pressure sensor both sense pressure applied thereto. In the second state, no pressure is applied to the first pressure sensor and only the second pressure sensor senses pressure. When the foldable display screen 40 is in the unfolded state, no pressure is applied to the first pressure sensor and the second pressure sensor.

When receiving a signal from the first pressure sensor and a signal from the second pressure sensor at the same time, the controller 52 determines that the foldable display screen 40 is in the first state and turns off the first display area 422, the second display area 424, and the middle display area 423. When only receiving a signal from the second pressure sensor, the controller 52 determines that the foldable display screen 40 is in the second state and turns off the middle display area 423, the second display area 424, and the remaining part 4221 of the first display area 422, and turns on the part 4220. Without receiving any signal from the first pressure sensor and the second pressure sensor, the controller 52 determines that the foldable display screen 40 is in the unfolded state, the controller 52 turns on the first display area 422, the middle display area 423, and the second display area 424, to form the large complete display screen.

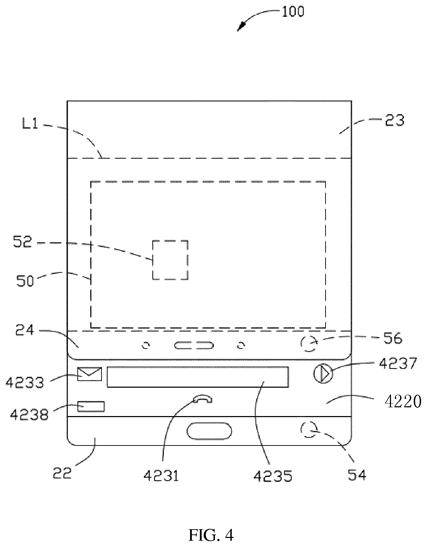

FIG. 4 illustrates a schematic front view of the electronic apparatus of FIG. 3. The part 4220 of the first display area 422 can be controlled to display the incoming call icon 4231. In the second state, when an incoming call is received, the controller 52 controls the incoming call icon 4231 to be displayed on the part 4220. At this time, the user can be allowed to answer the call without expanding the foldable display screen 40, which is convenient in use.

The part 4220 can be controlled to display the text message prompt icon 4233 and a text display box 4235.In the second state, when a text message is received, the controller 52 controls the text message prompt icon 4233 to be displayed on the part 4220. When the user clicks the text message prompt icon 4233, a sender of the text message and a summary of the text message are displayed in the text display box 4235, which facilitates conveniently viewing a content of the text message without expanding the foldable display screen 40. The summary of the text message can be set to be a part of the text message. For example, the first 10 words of the text message. Thus, the user can view the text message without expanding the foldable display screen 40, which is convenient in use.

In other embodiments, when the electronic apparatus 100 receives the text message, the controller 52 controls the text message prompt icon 4233 to be displayed. At the same time, the controller 52 controls the content of the text message to be displayed and scrolled in the text display box 4235.

The part 4220 can be controlled to display the music playback icon 4237. The controller 52 can identify a program that is running and displayed before the foldable display screen 40 is folded. For example, the electronic apparatus 100 plays a music when the foldable display screen 40 is in the unfolded state. The controller 52 controls the music playback icon 4237 to be displayed on the part 4220 and the electronic apparatus 100 continues to play the music when the foldable display screen 40 is folded to be in the second state. In this way, the user can listen to the music and operate the music playback icon 4237 without expanding the foldable display screen 40, which is convenient in use.

The part 4220 can be further controlled to display the calendar information and time information icon 4238. In the second state, the controller 52 controls the calendar information and time information icon to display a date and a time on the part 4220. Thus, the user can view the date and the time without expanding the foldable display screen40, which is convenient in use.

In other embodiments, the part 4220 can also be controlled to display an icon for displaying the power amount, an icon for displaying the network, and the like, as needed.

When the large complete display screen is not required, the foldable display screen 40 of the electronic apparatus 100 is folded along the second folding line L2. In this way, the electronic apparatus 100 occupies less space and is convenient for the user to carry. In addition, the part 4220 can display simple information to enable the user to conveniently perform some simple operations and acquire some simple information, which is convenient in use and improves the user experience.

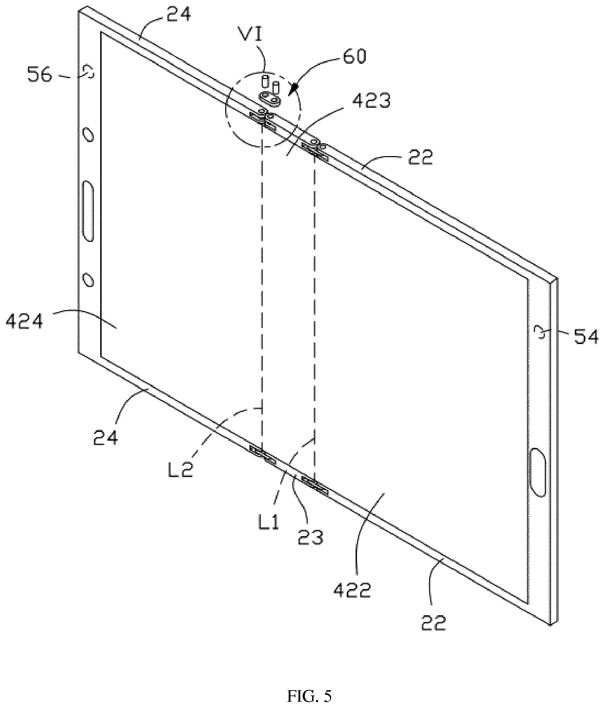

FIG. 5 illustrates a schematic perspective exploded view of the electronic apparatus according to the first embodiment of the present disclosure. The first frame 22 and the middle frame 23 of the electronic apparatus 100 are rotatably connected by two connecting members 60. The second frame 24 and the middle frame 23 of the electronic apparatus 100 are rotatably connected by two connecting members 60. The first folding line L1 extends the two connecting members 60 between the first frame 22 and the middle frame 23. The second folding line L2 extends through the two connecting members 60 between the second frame 24 and the middle frame 23. A receiving space 320 is defined between the first frame 22 and the middle frame 23 to receive a curved portion 32 of the foldable display screen 40 in the first state, as illustrated in FIG.2. A receiving space 340 is defined between the second frame 24 and the middle frame 23 to receive a curved portion 34 of the foldable display screen 40 in the second state, as illustrated in FIG.3. In this way, the foldable display screen 40 is prevented from being broken due to excessive folding.

Since the four connecting members 60 of the electronic apparatus 100 of the present disclosure have the same structure, only one of the connecting members 60 located between the second frame 24 and the middle frame 23 is described in detail.

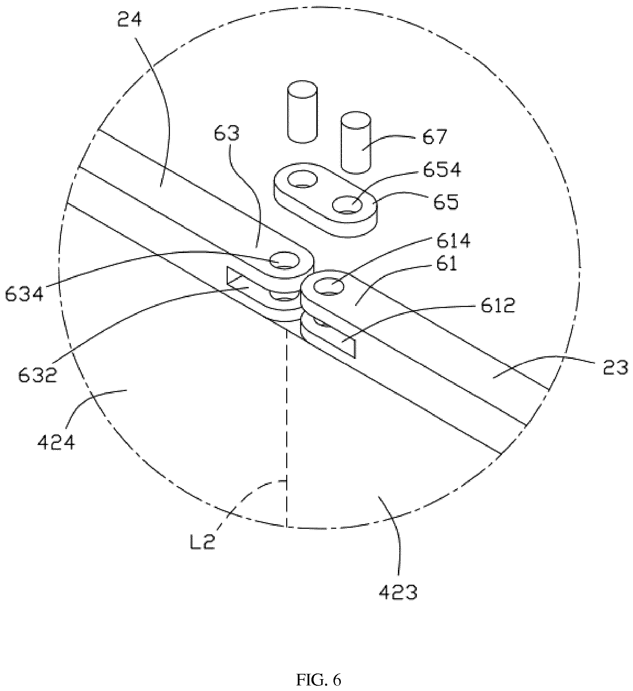

FIG. 6 illustrates an enlarged view of a portion VI of FIG. 5. The connecting member 60 includes a pair of first tabs 61 disposed at the middle frame 23, a pair of second tabs 63 disposed at the second frame 24, a connecting bar 65, and the two rotating shafts 67. A first connecting slot 612 is defined between the pair of first tabs 61 and a second connecting slot 632 is defined between the pair of second tabs 63. The connecting bar 65 are rotatably connected to the pair of second tabs 63 and the pair of first tabs 61. The first connecting slot 612 and the second connecting slots 632 both extend in a direction perpendicular to the second folding line L2. A pair of first shaft holes 614 is defined in distal ends of the first tabs 61 in the direction of the second folding line L2 and communicates the first connecting slot 612. A pair of second shaft holes 634 is defined in distal ends of the second tabs 63 in the direction of the second folding line L2 and communicates the second connecting slot 613. The connecting bar 65 is strip-shaped. Opposite ends of the connecting bar 65 are arc-shaped. Two connecting holes 654 are defined in the opposite ends of the connecting bar 65, respectively. In assembly, one end of the connecting bar 65 is received in the first connecting slot 612 and the other end of the connecting bar 65 is received in the second connecting slot 632. One of the rotating shafts 67 extends through the first shaft holes 614 and the corresponding connecting hole 654. The other one of the rotating shaft 67 extends through the second shaft holes 634 and the corresponding connecting hole 654. In this way, the second frame 22 is rotatably attached to the middle frame 23.

The opposite ends of the connecting bar 65 are configured to be arc-shaped, which can prevent the connecting bar 65 from being blocked during rotating, thereby smoothing the folding of the foldable display screen 40. Each of the ends of the first tabs 61 facing the second tabs 63 is configured to be arced-shaped, and each of the ends of the second tabs 63 facing the first tabs 61 is configured to be arc-shaped. In this way, the arced ends of the first tabs 61 and the second tabs 63 engage with each other to smooth the rotation of the first tabs 61 and the second tabs 63 and further beauty the appearance of the electronic apparatus 100.

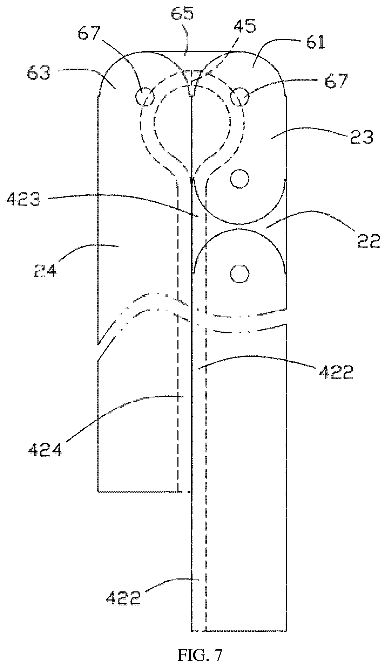

FIG. 7 illustrates a schematic structure side view of the electronic apparatus of FIG. 5 folded along the second folding line. When the foldable display screen 40 is folded along the second folding liner L2, the second frame 24 is rotated toward the middle frame 23 about the corresponding rotating shaft 67, or the middle frame 23 is rotated toward the second frame 24 about the corresponding rotating shaft 67. The curved portion 34 is formed between the second display area 424 and the middle display area 423, as illustrated in FIG.3. The curved portion 34 is received in the receiving space 340 formed between the two connecting members 60, which can prevent the foldable display screen 40 from being broken due to excessive folding. At this time, a portion of the second display area 424 away from the second folding line L2 covers the first display area 422. The remaining part 4221 of the first display area 422 is covered and the part 4220 is exposed. The controller 52 controls the display of the middle display area 423, the second display area 424, and the remaining part 4221 of the first display area 422 to be turned off and controls the part 4220 to be turned on.

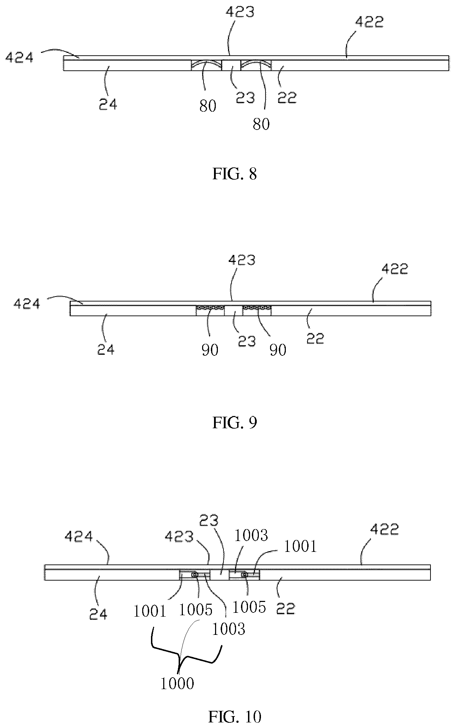

FIG. 8 illustrates a schematic structural view of an electronic apparatus according to a second embodiment of the present disclosure. The structure of the electronic apparatus of the present disclosure in the second embodiment is similar to that in the first embodiment, except that connecting members 80 between the first frame 22 and the middle frame 23 and connecting members 80 between the second frame 24 and the middle frame 23 in the second embodiment are different from the connecting members 60 in the first embodiment. In the second embodiment, the connecting members 80 between the first frame 22 and the middle frame 23, and the connecting members 80 between the second frame 24 and the middle frame 23 are elastic pieces. For the sake of brevity, only one of the connecting members 80 located between the second frame 24 and the middle frame 23 is described in detail. When the foldable display screen 40 is folded, the elastic pieces are elastically deformed and curved. When the foldable display screen 40 is folded along the first folding line L1, the curved portion 32 is formed between the first display area 422 and the middle display area 423. The curved elastic piece can protect the curved portion 32 of the foldable display screen 42 from being broken at the curved portion 32. When the foldable display screen 40 is folded along the second folding line L2, the elastic pieces are elastically deformed and curved, the curved portion 34 is formed between the second display area 424 and the middle display area 423. The elastic pieces can protect the curved portion 34 of the foldable display screen 40 from being broken. The elastic piece can be a flexible metal elastic piece, an elastic rubber piece, or an elastic plastic piece or the like. In the illustrated embodiment, the elastic piece is a soft metal elastic piece.

FIG. 9 illustrates a schematic structural view of an electronic apparatus according to a third embodiment of the present disclosure. The structure of the electronic apparatus of the present disclosure in the third embodiment is similar to that in the first embodiment, except that connecting members 90 between the first frame 22 and the middle frame 23 and connecting members between the second frames 24 and the middle frame 23 in the third embodiment are different from the connecting members 60 in the first embodiment. In the third embodiment, the connecting members 90 between the first frame 22 and the middle frame 23, and the connecting members 90 between the second frame 24 and the middle frame 23 are hinges. For the sake of brevity, only one of the connecting members 90 located between the second frame 24 and the middle frame 23 is described in detail. When the foldable display screen 40 is folded along the first folding line L2, the hinges are curved, and the curved portion 32 is formed between the first display area 422 and the middle display area 423. The hinges can protect the curved portion 32 from being broken. When the foldable display screen 40 is folded along the second folding line L2, the hinges are curved, and the curved portion 34 is formed between the second display area 424 and the middle display area 423. The hinges may protect the curved portion 32 from being broken. In the illustrated embodiment, the hinge is a damping hinge.

FIG. 10 illustrates a schematic structural view of an electronic apparatus according to a fourth embodiment of the present disclosure. The structure of the electronic apparatus of the present disclosure in the fourth embodiment is similar to that in the first embodiment, except that connecting members 1000 between the first frame 22 and the middle frame 23, and connecting members between the second frame 24 and the middle frame 23 in the fourth embodiment are different from the connecting members 60 in the first embodiment. In the fourth embodiment, the first frame 22 and the middle frame 23 are foldably connected by connecting members 1000, and the second frame 24 and the middle frame 23 are foldably connected by connecting members 1000. For the sake of brevity, only one of the connecting members 1000 located between the second frame 24 and the middle frame 23 is described in detail. The connecting member 1000 includes a first connecting piece 1001, a second connecting piece 1003, and a post 1005. The first connecting piece 1001 extends from the second frame 24 and the second connecting piece 1003 extends from the middle frame 23. The first connecting piece 1001 and the second connecting piece 1003 are rotatably connected by the post 1005.

When the foldable display screen 40 is folded along the first folding line L1, the first connecting pieces 1001 and the second connecting pieces 1003 are rotated about the corresponding posts 1005. Thus, the first display area 422 can be covered by the middle display area 423 and the second display area 424. When the foldable display screen 40 is folded along the second folding line L2, the first connecting pieces 1001 and the second connecting pieces 1003 are rotated about the corresponding posts 1005. Thus, the second display area 422 covers the remaining part 4221 of the first display area 422, the part 4220 is exposed, and the part 4220 is controlled to be turned on.

In the illustrated embodiment, when the foldable display screen is folded along the second folding line, the foldable display screen is asymmetrically folded such that the part of the foldable display screen is exposed and visible for displaying. The user can perform simple operations and acquire some simple information through the part of the foldable display screen, which is convenient to operate and save power.

## Claims

1. An electronic apparatus (100), comprising:
a casing (20), comprising:
a middle frame (23) having a first side (231) and a second side (232) opposite the first side (231);
a first frame (22) rotatably attached to the first side (231) of the middle frame (23); and
a second frame (24) rotatably attached to the second side (232) of the middle frame (23); and
a foldable display screen (40) comprising a back surface (41) attached to the middle frame (23), the first frame (22), and the second frame (24) of the casing (20), and a display surface (42) opposite the back surface (41) and configured to display visual information, the foldable display screen (40) being operable to be folded along the first side (231) of the middle frame (23) to be in a first state, and being operable to be folded along the second side (232) of the middle frame (23) to be in a second state, and furthermore being operable to be in an unfolded state;
the display surface (42) being invisible in the first state, and part (4220) of the display surface (42) being visible and the
remaining part of the display surface (42) being invisible in the second state;
**characterized by**:
a first position sensor (54) being disposed at the end of the first frame (22) away from the middle frame (23); and
a second position sensor (56) being disposed at the end of the second frame (24) away from the middle frame (23);
and a controller (52), electrically coupled to said first (54) and second (56) position sensor, the controller (52) being configured to determine whether the foldable display screen (40) is in the first state, the second state, or in the unfolded state according to a relative positional relationship between the first position sensor (54) and the second position sensor (56).

2. An electronic apparatus (100), comprising:
a casing (20), comprising:
a middle frame (23) having a first side (231) and a second side (232) opposite the first side (231);
a first frame (22) rotatably attached to the first side (231) of the middle frame (23); and
a second frame (24) rotatably attached to the second side (232) of the middle frame (23); and
a foldable display screen (40) comprising a back surface (41) attached to the middle frame (23), the first frame (22), and the second frame (24) of the casing (20), and a display surface (42) opposite the back surface (41) and configured to display visual information, the foldable display screen (40) being operable to be folded along the first side (231) of the middle frame (23) to be in a first state, and being operable to be folded along the second side (232) of the middle frame (23) to be in a second state, and furthermore being operable to be in an unfolded state,
the display surface (42) being invisible in the first state, and part (4220) of the display surface (42) being visible and the
remaining part of the display surface (42) being invisible in the second state;
**characterized by**:
a first pressure sensor being disposed at the end of the first frame (22) away from the middle frame (23); and
a second pressure sensor being disposed at the middle frame (23);
and a controller (52), electrically coupled to said first and second pressure sensor, the controller (52) being configured to determine whether the foldable display screen (40) is in the first state, the second state, or in the unfolded state according to the pressure detected by the first pressure sensor and the pressure detected by the second pressure sensor.

3. The electronic apparatus (100) of claim 1 or 2, wherein the display surface (42) further comprises a first display area (422) disposed at the first frame (22), a second display area (424) disposed at the second frame (24), and a middle display area (423) disposed at the middle frame (23) and located between the first display area (422) and the second display area (424), part of the first display area (422) is exposed in the second state, the second display area (424) covers the middle display area (423) and the remaining part of the first display area (422) in the second state, the part of the first display area (422) is the part (4220) of the display surface (42) and the remaining part of the first display area (422) is the remaining part (4221) of the display surface (42).

4. The electronic apparatus (100) of claim 3, wherein the first display area (422) is fully covered by the second display area (424) and the middle display area (423) in the first state.

5. The electronic apparatus (100) of claim 3 or claim 4, wherein the middle display area (423) has a width equal to a width of the part (4220) of the first display area (422) uncovered by the second display area (424) in the second state.

6. The electronic apparatus (100) of any one of claim 3 to claim 5, wherein the first display area (422), the second display area (424), and the middle display area (423) are all rectangular, and the first display area (422) has an area equal to a sum of an area of the second display area (424) and an area of the middle display area (423).

7. The electronic apparatus (100) of any one of claim 3 to claim 6, wherein the electronic apparatus (100) further comprises a main board (50), the main board (50) comprises a controller (52) configured to control display of the first display area (422), the middle display area (423), and the second display area (424) according to switch between the first state and the second state of the foldable display screen (40).

8. The electronic apparatus (100) of claim 7, wherein the controller (52) is configured to turn off the first display area (422), the middle display area (423), and the second display area (424) in the first state, and to turn off the middle display area (423), the second display area (424), and the remaining part (4221) of the first display area (422) covered by the second display area (424) in the second state, and to turn on the part (4420) of the first display area (422) in the second state.

9. The electronic apparatus (100) of claim 7 or claim 8, wherein the controller (52) is further configured to turn on the first display area (422), the middle display area (423), and the second display area (424) when the foldable display screen (40) is in an unfolded state.

10. The electronic apparatus (100) of claim 1, wherein the controller (52) is configured to determine that the foldable display screen (40) is in the first state when a distance between the first position sensor (54) and the second position sensor (56) is less than a preset distance, the controller (52) is further configured to determine that the foldable display screen (40) is in the second state when a distance between the first position sensor (54) and the second position sensor (56) is equal to the preset distance, and the controller (52) is further configured to determine that the foldable display screen (40) is in the unfolded state when a distance between the first position sensor (54) and the second position sensor (56) is greater than the preset distance.

11. The electronic apparatus (100) of claim 2, wherein the controller (52) is configured to determine that the foldable display screen (40) is in the first state when both the first pressure sensor and the second sensor sense pressure, the controller (52) is further configured to determine that the foldable display screen (40) is in the second state when the second sensor rather than the first sensor senses pressure, and the controller (52) is further configured to determine that the foldable display screen (40) is in the unfolded state when neither the first pressure sensor nor the second sensor senses pressure.

12. The electronic apparatus (100) of any one of claim 1 to claim 11, wherein the first frame (22) and the middle frame (23) defines a receiving space (320) therebetween to receive a curved portion (32) of the foldable display screen (40) in the second state, and the second frame (24) and the middle frame (23) define a second receiving space (340) therebetween to receive a curved portion (34) of the foldable display screen (34) in the second state.

13. The electronic apparatus (100) of any one of claim 1 to claim 11, wherein the electronic apparatus (100) further comprises connecting members (60), each of the connecting members (60) comprises a pair of first tabs (61) disposed at the middle frame (23), a pair of second tabs (63) disposed at the second frame (24) or the first frame (22), a connecting bar (65), and a pair of rotating shafts (67), the connecting bar (65) has an end rotatably connected to the pairs of first tabs (61) through one of the rotating shafts (67), and another end rotatably connected to the pair of second tabs (63) through the other one of the rotating shafts (67).

14. The electronic apparatus (100) of claim 13, wherein a first connecting slot (612) is defined between the pair of first tabs (61) and a second connecting slot (632) is defined between the pair of second tabs (63), the first connecting slot (612) and the second connecting slots (632) both extend in a direction perpendicular to the second side (232) of the middle frame (23), the connecting bar (65) being rotatably connected to the pair of second tabs (63) and the pair of first tabs (61).

15. The electronic apparatus (100) of claim 14, wherein a pair of first shaft holes (614) is defined in distal ends of the first tabs (61) in the direction of the second side (232) of the middle frame (23) and communicates with the first connecting slot (612), a pair of second shaft holes (634) is defined in distal ends of the second tabs (63) in the direction of the second side (232) of the middle frame (23) and communicates with the second connecting slot (613).

## Patentansprüche

1. Elektronische Vorrichtung (100), umfassend:
ein Gehäuse (20), umfassend:
einen mittleren Rahmen (23), der eine erste Seite (231) und eine zweite Seite (232) gegenüber der ersten Seite (231) aufweist;
einen ersten Rahmen (22), der drehbar an der ersten Seite (231) des mittleren Rahmens (23) angebracht ist; und
einen zweiten Rahmen (24), der drehbar an der zweiten Seite (232) des mittleren Rahmens (23) angebracht ist; und
einen faltbaren Anzeigebildschirm (40), der eine rückseitige Oberfläche (41), die an dem mittleren Rahmen (23), dem ersten Rahmen (22) und dem zweiten Rahmen (24) des Gehäuses (20) angebracht ist, und eine Anzeigeoberfläche (42) gegenüber der rückseitigen Oberfläche (41) umfasst und konfiguriert ist, um visuelle Informationen anzuzeigen, wobei der faltbare Anzeigebildschirm (40) betreibbar ist, um entlang der ersten Seite (231) des mittleren Rahmens (23) gefaltet zu werden, um in einem ersten Zustand zu sein, und betreibbar ist, um entlang der zweiten Seite (232) des mittleren Rahmens (23) gefaltet zu werden, um in einem zweiten Zustand zu sein, und ferner betreibbar ist, um in einem entfalteten Zustand zu sein;
wobei die Anzeigeoberfläche (42) im ersten Zustand unsichtbar ist und ein Teil (4220) der Anzeigeoberfläche (42) sichtbar ist und der verbleibende Teil der Anzeigeoberfläche (42) im zweiten Zustand unsichtbar sind;
durch Folgendes gekennzeichnet:
einen ersten Positionssensor (54), der am Ende des ersten Rahmens (22) entfernt von dem mittleren Rahmen (23) angeordnet ist; und
einen zweiten Positionssensor (56), der am Ende des zweiten Rahmens (24) entfernt von dem mittleren Rahmen (23) angeordnet ist; und
eine Steuerung (52), die elektrisch mit dem ersten (54) und dem zweiten (56) Positionssensor gekoppelt ist, wobei die Steuerung (52) konfiguriert ist, um zu bestimmen, ob gemäß einer relativen Positionsbeziehung zwischen dem ersten Positionssensor (54) und dem zweiten Positionssensor (56) der faltbare Anzeigebildschirm (40) sich im ersten Zustand oder im zweiten Zustand oder im entfalteten Zustand befindet.

2. Elektronische Vorrichtung (100), umfassend:
ein Gehäuse (20), umfassend:
einen mittleren Rahmen (23), der eine erste Seite (231) und eine zweite Seite (232) gegenüber der ersten Seite (231) aufweist;
einen ersten Rahmen (22), der drehbar an der ersten Seite (231) des mittleren Rahmens (23) angebracht ist; und
einen zweiten Rahmen (24), der drehbar an der zweiten Seite (232) des mittleren Rahmens (23) angebracht ist; und
einen faltbaren Anzeigebildschirm (40), der eine rückseitige Oberfläche (41), die an dem mittleren Rahmen (23), dem ersten Rahmen (22) und dem zweiten Rahmen (24) des Gehäuses (20) angebracht ist, und eine Anzeigeoberfläche (42) gegenüber der rückseitigen Oberfläche (41) umfasst und konfiguriert ist, um visuelle Informationen anzuzeigen, wobei der faltbare Anzeigebildschirm (40) betreibbar ist, um entlang der ersten Seite (231) des mittleren Rahmens (23) gefaltet zu werden, um in einem ersten Zustand zu sein, und betreibbar ist, um entlang der zweiten Seite (232) des mittleren Rahmens (23) gefaltet zu werden, um in einem zweiten Zustand zu sein, und ferner betreibbar ist, um in einem entfalteten Zustand zu sein,
wobei die Anzeigeoberfläche (42) im ersten Zustand unsichtbar ist und ein Teil (4220) der Anzeigeoberfläche (42) sichtbar ist und der verbleibende Teil der Anzeigeoberfläche (42) im zweiten Zustand unsichtbar ist;
durch Folgendes gekennzeichnet:
einen ersten Drucksensor, der am Ende des ersten Rahmens (22) entfernt von dem mittleren Rahmen (23) angeordnet ist; und
einen zweiten Drucksensor, der an dem mittleren Rahmen (23) angeordnet ist; und
eine Steuerung (52), die elektrisch mit dem ersten und dem zweiten Drucksensor gekoppelt ist, wobei die Steuerung (52) konfiguriert ist, um zu bestimmen, ob gemäß dem von dem ersten Drucksensor erkannten Druck und dem zweiten Drucksensor erkannten Druck der faltbare Anzeigebildschirm (40) sich im ersten Zustand oder im zweiten Zustand oder im entfalteten Zustand befindet.

3. Elektronische Vorrichtung (100) nach Anspruch 1 oder 2, wobei die Anzeigeoberfläche (42) ferner einen ersten Anzeigebereich (422), der an dem ersten Rahmen (22) angeordnet ist, einen zweiten Anzeigebereich (424), der an dem zweiten Rahmen (24) angeordnet ist, und einen mittleren Anzeigebereich (423), der an dem mittleren Rahmen (23) angeordnet ist und sich zwischen dem ersten Anzeigebereich (422) und dem zweiten Anzeigebereich (424) befindet, umfasst, ein Teil des ersten Anzeigebereichs (422) im zweiten Zustand freigelegt ist, der zweite Anzeigebereich (424) den mittleren Anzeigebereich (423) und den verbleibenden Teil des ersten Anzeigebereichs (422) im zweiten Zustand verdeckt, der Teil des ersten Anzeigebereichs (422) der Teil (4220) der Anzeigeoberfläche (42) ist und der verbleibende Teil des ersten Anzeigebereichs (422) der verbleibende Teil (4221) der Anzeigeoberfläche (42) ist.

4. Elektronische Vorrichtung (100) nach Anspruch 3, wobei der erste Anzeigebereich (422) im ersten Zustand vollständig von dem zweiten Anzeigebereich (424) und dem mittleren Anzeigebereich (423) verdeckt ist.

5. Elektronische Vorrichtung (100) nach Anspruch 3 oder Anspruch 4, wobei der mittlere Anzeigebereich (423) eine Breite hat, die gleich einer Breite des Teils (4220) des ersten Anzeigebereichs (422) ist, der im zweiten Zustand nicht von dem zweiten Anzeigebereich (424) verdeckt ist.

6. Elektronische Vorrichtung (100) nach einem der Ansprüche 3 bis 5, wobei der erste Anzeigebereich (422), der zweite Anzeigebereich (424) und der mittlere Anzeigebereich (423) allesamt rechteckig sind, und der erste Anzeigebereich (422) eine Fläche aufweist, die gleich einer Summe einer Fläche der zweiten Anzeigefläche (424) und einer Fläche der mittleren Anzeigefläche (423) ist.

7. Elektronische Vorrichtung (100) nach einem der Ansprüche 3 bis 6, wobei die elektronische Vorrichtung (100) ferner eine Hauptplatine (50) umfasst, wobei die Hauptplatine (50) eine Steuerung (52) umfasst, die konfiguriert ist, um die Anzeige des ersten Anzeigebereichs (422), des mittleren Anzeigebereichs (423) und des zweiten Anzeigebereichs (424) gemäß einem Umschalten zwischen dem ersten Zustand und dem zweiten Zustand des faltbaren Anzeigebildschirms (40) zu steuern.

8. Elektronische Vorrichtung (100) nach Anspruch 7, wobei die Steuerung (52) konfiguriert ist, um den ersten Anzeigebereich (422), den mittleren Anzeigebereich (423) und den zweiten Anzeigebereich (424) im ersten Zustand auszuschalten und den mittleren Anzeigebereich (423), den zweiten Anzeigebereich (424) und den verbleibenden Teil (4221) des ersten Anzeigebereichs (422), der durch den zweiten Anzeigebereich (424) verdeckt ist, im zweiten Zustand auszuschalten, und den Teil (4420) des ersten Anzeigebereichs (422) im zweiten Zustand einzuschalten.

9. Elektronische Vorrichtung (100) nach Anspruch 7 oder Anspruch 8, wobei die Steuerung (52) ferner konfiguriert ist, um den ersten Anzeigebereich (422), den mittleren Anzeigebereich (423) und den zweiten Anzeigebereich (424) einzuschalten, wenn sich der faltbare Anzeigebildschirm (40) in einem entfalteten Zustand befindet.

10. Elektronische Vorrichtung (100) nach Anspruch 1, wobei die Steuerung (52) konfiguriert ist, um zu bestimmen, dass sich der faltbare Anzeigebildschirm (40) in dem ersten Zustand befindet, wenn ein Abstand zwischen dem ersten Positionssensor (54) und dem zweiten Positionssensor (56) kleiner als ein voreingestellter Abstand ist, die Steuerung (52) ferner konfiguriert ist, um zu bestimmen, dass sich der faltbare Anzeigebildschirm (40) im zweiten Zustand befindet, wenn ein Abstand zwischen dem ersten Positionssensor (54) und dem zweiten Positionssensor (56) gleich dem voreingestellten Abstand ist, und die Steuerung (52) ferner konfiguriert ist, um zu bestimmen, dass sich der faltbare Anzeigebildschirm (40) im entfalteten Zustand befindet, wenn ein Abstand zwischen dem ersten Positionssensor (54) und dem zweiten Positionssensor (56) größer als der voreingestellte Abstand ist.

11. Elektronische Vorrichtung (100) nach Anspruch 2, wobei die Steuerung (52) konfiguriert ist, um zu bestimmen, dass sich der faltbare Anzeigebildschirm (40) im ersten Zustand befindet, wenn sowohl der erste Drucksensor als auch der zweite Sensor Druck erfassen, die Steuerung (52) ferner konfiguriert ist, um zu bestimmen, dass sich der faltbare Anzeigebildschirm (40) in dem zweiten Zustand befindet, wenn der zweite Sensor, aber nicht der erste Sensor, Druck erfasst, und die Steuerung (52) ferner konfiguriert ist, um zu bestimmen, dass der faltbare Anzeigebildschirm (40) im entfalteten Zustand ist, wenn weder der erste Drucksensor noch der zweite Sensor Druck erfassen.

12. Elektronische Vorrichtung (100) nach einem der Ansprüche 1 bis 11, wobei der erste Rahmen (22) und der mittlere Rahmen (23) zwischen einander einen Aufnahmeraum (320) definieren, um einen gekrümmten Abschnitt (32) des faltbaren Anzeigebildschirms (40) im zweiten Zustand darin aufzunehmen, und der zweite Rahmen (24) und der mittlere Rahmen (23) einen zweiten Aufnahmeraum (340) zwischen einander definieren, um einen gekrümmten Abschnitt (34) des faltbaren Anzeigebildschirms (34) im zweiten Zustand darin aufzunehmen.

13. Elektronische Vorrichtung (100) nach einem der Ansprüche 1 bis 11, wobei die elektronische Vorrichtung (100) ferner Verbindungselemente (60) umfasst, wobei jedes der Verbindungselemente (60) ein Paar von ersten Laschen (61), die am mittleren Rahmen (23) angeordnet sind, ein Paar von zweiten Laschen (63), die am zweiten Rahmen (24) oder am ersten Rahmen (22) angeordnet sind, eine Verbindungsstange (65) und ein Paar von Drehwellen (67) umfasst, die Verbindungsstange (65) ein Ende, das drehbar mit den Paaren von ersten Laschen (61) durch eine der Drehwellen (67) verbunden ist, und ein anderes Ende hat, das drehbar mit dem Paar von zweiten Laschen (63) durch die andere der Drehwellen (67) verbunden ist.

14. Elektronische Vorrichtung (100) nach Anspruch 13, wobei ein erster Verbindungsschlitz (612) zwischen dem Paar von ersten Laschen (61) definiert ist und ein zweiter Verbindungsschlitz (632) zwischen dem Paar von zweiten Laschen (63) definiert ist, der erste Verbindungsschlitz (612) und der zweite Verbindungsschlitz (632) sich beide in einer Richtung senkrecht zur zweiten Seite (232) des mittleren Rahmens (23) erstrecken, die Verbindungsstange (65) drehbar mit dem Paar von zweiten Laschen (63) und dem Paar von ersten Laschen (61) verbunden ist.

15. Elektronische Vorrichtung (100) nach Anspruch 14, wobei ein Paar von ersten Wellenbohrungen (614) an distalen Enden der ersten Laschen (61) in Richtung der zweiten Seite (232) des mittleren Rahmens (23) definiert sind und mit dem ersten Verbindungsschlitz (612) in Kommunikation sind, ein Paar von zweiten Wellenbohrungen (634) an distalen Enden der zweiten Laschen (63) in Richtung der zweiten Seite (232) des mittleren Rahmens (23) definiert sind und mit dem zweiten Verbindungsschlitz (613) in Kommunikation sind.

## Revendications

1. Appareil électronique (100), comprenant :
un boîtier (20), comprenant :
un cadre intermédiaire (23) ayant un premier côté (231) et un deuxième côté (232) opposé au premier côté (231) ;
un premier cadre (22) attaché de façon rotative au premier côté (231) du cadre intermédiaire (23) ; et un deuxième cadre (24) attaché de façon rotative au deuxième côté (232) du cadre intermédiaire (23) ; et
un écran d'affichage pliable (40) comprenant une surface arrière (41) attachée au cadre intermédiaire (23), au premier cadre (22), et au deuxième cadre (24) du boîtier (20), et une surface d'affichage (42) opposée à la surface arrière (41) et configurée pour afficher des informations visuelles, l'écran d'affichage pliable (40) étant utilisable pour être plié le long du premier côté (231) du cadre intermédiaire (23) afin d'être dans un premier état, et étant utilisable pour être plié le long du deuxième côté (232) du cadre intermédiaire (23) afin d'être dans un deuxième état, et étant en outre utilisable pour être dans un état déplié ;
la surface d'affichage (42) étant invisible dans le premier état, et une partie (4220) de la surface d'affichage (42) étant visible et la partie restante de la surface d'affichage (42) étant invisible dans le deuxième état ;
**caractérisé par** :
un premier capteur de position (54) qui est disposé au niveau de l'extrémité du premier cadre (22) à l'écart du cadre intermédiaire (23) ; et
un deuxième capteur de position (56) qui est disposé au niveau de l'extrémité du deuxième cadre (24) à l'écart du cadre intermédiaire (23) ;
et un dispositif de commande (52), électriquement couplé audit premier (54) et audit deuxième (56) capteur de position, le dispositif de commande (52) étant configuré pour déterminer si l'écran d'affichage pliable (40) est dans le premier état, le deuxième état, ou dans l'état déplié selon une relation de position relative entre le premier capteur de position (54) et le deuxième capteur de position (56).

2. Appareil électronique (100), comprenant :
un boîtier (20), comprenant :
un cadre intermédiaire (23) ayant un premier côté (231) et un deuxième côté (232) opposé au premier côté (231) ; un premier cadre (22) attaché de façon rotative au premier côté (231) du cadre intermédiaire (23) ; et
un deuxième cadre (24) attaché de façon rotative au deuxième côté (232) du cadre intermédiaire (23) ; et
un écran d'affichage pliable (40) comprenant une surface arrière (41) attachée au cadre intermédiaire (23), au premier cadre (22), et au deuxième cadre (24) du boîtier (20), et une surface d'affichage (42) opposée à la surface arrière (41) et configurée pour afficher des informations visuelles, l'écran d'affichage pliable (40) étant utilisable pour être plié le long du premier côté (231) du cadre intermédiaire (23) afin d'être dans un premier état, et étant utilisable pour être plié le long du deuxième côté (232) du cadre intermédiaire (23) afin d'être dans un deuxième état, et étant en outre utilisable pour être dans un état déplié,
la surface d'affichage (42) étant invisible dans le premier état, et une partie (4220) de la surface d'affichage (42) étant visible et la partie restante de la surface d'affichage (42) étant invisible dans le deuxième état ;
**caractérisé par** :
un premier capteur de pression qui est disposé au niveau de l'extrémité du premier cadre (22) à l'écart du cadre intermédiaire (23) ; et
un deuxième capteur de pression qui est disposé au niveau du cadre intermédiaire (23) ;
et un dispositif de commande (52), électriquement couplé audit premier et audit deuxième capteur de pression, le dispositif de commande (52) étant configuré pour déterminer si l'écran d'affichage pliable (40) est dans le premier état, le deuxième état, ou dans l'état déplié selon la pression détectée par le premier capteur de pression et la pression détectée par le deuxième capteur de pression.

3. Appareil électronique (100) selon la revendication 1 ou 2, dans lequel la surface d'affichage (42) comprend en outre une première zone d'affichage (422) disposée au niveau du premier cadre (22), une deuxième zone d'affichage (424) disposée au niveau du deuxième cadre (24), et une zone d'affichage intermédiaire (423) disposée au niveau du cadre intermédiaire (23) et située entre la première zone d'affichage (422) et la deuxième zone d'affichage (424), une partie de la première zone d'affichage (422) est exposée dans le deuxième état, la deuxième zone d'affichage (424) couvre la zone d'affichage intermédiaire (423) et la partie restante de la première zone d'affichage (422) dans le deuxième état, la partie de la première zone d'affichage (422) est la partie (4220) de la surface d'affichage (42) et la partie restante de la première zone d'affichage (422) est la partie restante (4221) de la surface d'affichage (42).

4. Appareil électronique (100) selon la revendication 3, dans lequel la première zone d'affichage (422) est entièrement couverte par la deuxième zone d'affichage (424) et la zone d'affichage intermédiaire (423) dans le premier état.

5. Appareil électronique (100) selon la revendication 3 ou la revendication 4, dans lequel la zone d'affichage intermédiaire (423) a une largeur égale à une largeur de la partie (4220) de la première zone d'affichage (422) non couverte par la deuxième zone d'affichage (424) dans le deuxième état.

6. Appareil électronique (100) selon l'une quelconque de la revendication 3 à la revendication 5, dans lequel la première zone d'affichage (422), la deuxième zone d'affichage (424), et la zone d'affichage intermédiaire (423) sont toutes rectangulaires, et la première zone d'affichage (422) a une zone égale à une somme d'une zone de la deuxième zone d'affichage (424) et d'une zone de la zone d'affichage intermédiaire (423).

7. Appareil électronique (100) selon l'une quelconque de la revendication 3 à la revendication 6, l'appareil électronique (100) comprenant en outre une carte principale (50), la carte principale (50) comprenant un dispositif de commande (52) configuré pour commander l'affichage de la première zone d'affichage (422), de la zone d'affichage intermédiaire (423), et de la deuxième zone d'affichage (424) en fonction d'une commutation entre le premier état et le deuxième état de l'écran d'affichage pliable (40).

8. Appareil électronique (100) selon la revendication 7, dans lequel le dispositif de commande (52) est configuré pour éteindre la première zone d'affichage (422), la zone d'affichage intermédiaire (423), et la deuxième zone d'affichage (424) dans le premier état, et pour éteindre la zone d'affichage intermédiaire (423), la deuxième zone d'affichage (424), et la partie restante (4221) de la première zone d'affichage (422) couverte par la deuxième zone d'affichage (424) dans le deuxième état, et pour allumer la partie (4420) de la première zone d'affichage (422) dans le deuxième état.

9. Appareil électronique (100) selon la revendication 7 ou la revendication 8, dans lequel le dispositif de commande (52) est en outre configuré pour allumer la première zone d'affichage (422), la zone d'affichage intermédiaire (423), et la deuxième zone d'affichage (424) lorsque l'écran d'affichage pliable (40) est dans un état déplié.

10. Appareil électronique (100) selon la revendication 1, dans lequel le dispositif de commande (52) est configuré pour déterminer que l'écran d'affichage pliable (40) est dans le premier état lorsqu'une distance entre le premier capteur de position (54) et le deuxième capteur de position (56) est inférieure à une distance prédéfinie, le dispositif de commande (52) est en outre configuré pour déterminer que l'écran d'affichage pliable (40) est dans le deuxième état lorsqu'une distance entre le premier capteur de position (54) et le deuxième capteur de position (56) est égale à la distance prédéfinie, et le dispositif de commande (52) est en outre configuré pour déterminer que l'écran d'affichage pliable (40) est dans l'état déplié lorsqu'une distance entre le premier capteur de position (54) et le deuxième capteur de position (56) est supérieure à la distance prédéfinie.

11. Appareil électronique (100) selon la revendication 2, dans lequel le dispositif de commande (52) est configuré pour déterminer que l'écran d'affichage pliable (40) est dans le premier état lorsque à la fois le premier capteur de pression et le deuxième capteur captent une pression, le dispositif de commande (52) est en outre configuré pour déterminer que l'écran d'affichage pliable (40) est dans le deuxième état lorsque le deuxième capteur plutôt que le premier capteur capte une pression, et le dispositif de commande (52) est en outre configuré pour déterminer que l'écran d'affichage pliable (40) est dans l'état déplié lorsque ni le premier capteur de pression ni le deuxième capteur ne captent une pression.

12. Appareil électronique (100) selon l'une quelconque de la revendication 1 à la revendication 11, dans lequel le premier cadre (22) et le cadre intermédiaire (23) définissent un espace de réception (320) entre eux pour recevoir une portion incurvée (32) de l'écran d'affichage pliable (40) dans le deuxième état, et le deuxième cadre (24) et le cadre intermédiaire (23) définissent un deuxième espace de réception (340) entre eux pour recevoir une portion incurvée (34) de l'écran d'affichage pliable (34) dans le deuxième état.

13. Appareil électronique (100) selon l'une quelconque de la revendication 1 à la revendication 11, l'appareil électronique (100) comprenant en outre des éléments de raccordement (60), chacun des éléments de raccordement (60) comprenant une paire de premières languettes (61) disposées au niveau du cadre intermédiaire (23), une paire de deuxièmes languettes (63) disposées au niveau du deuxième cadre (24) ou du premier cadre (22), une barre de raccordement (65), et une paire d'arbres rotatifs (67), la barre de raccordement (65) ayant une extrémité raccordée de façon rotative aux paires de premières languettes (61) par le biais d'un arbre des arbres rotatifs (67), et une autre extrémité raccordée de façon rotative à la paire de deuxièmes languettes (63) par le biais de l'autre arbre des arbres rotatifs (67).

14. Appareil électronique (100) selon la revendication 13, dans lequel une première fente de raccordement (612) est définie entre la paire de premières languettes (61) et une deuxième fente de raccordement (632) est définie entre la paire de deuxièmes languettes (63), la première fente de raccordement (612) et la deuxième fente de raccordement (632) s'étendent toutes deux dans une direction perpendiculaire au deuxième côté (232) du cadre intermédiaire (23), la barre de raccordement (65) étant raccordée de façon rotative à la paire de deuxièmes languettes (63) et à la paire de premières languettes (61) .

15. Appareil électronique (100) selon la revendication 14, dans lequel une paire de premiers trous d'arbre (614) est définie dans les extrémités distales des premières languettes (61) dans la direction du deuxième côté (232) du cadre intermédiaire (23) et communique avec la première fente de raccordement (612), une paire de deuxièmes trous d'arbre (634) est définie dans les extrémités distales des deuxièmes languettes (63) dans la direction du deuxième côté (232) du cadre intermédiaire (23) et communique avec la deuxième fente de raccordement (613).
